# EUROPÄISCHE PATENTSCHRIFT

(11) **EP 3 004 752 B1**
(45) Veröffentlichungstag und Bekanntmachung des Hinweises auf die Patenterteilung: **02.01.2019**
(21) Anmeldenummer: 14761943.1
(22) Anmeldetag: 06.06.2014
(51) Int. Cl.: F24S 25/615, F24S 25/636

(54) **VORRICHTUNG ZUM BEFESTIGEN VON PV-MODULEN AUF DÄCHERN MIT TRAPEZBLECH**
DEVICE FOR FIXING PV MODULES ON ROOFS WITH A TRAPEZOIDAL SHEET
DISPOSITIF DE FIXATION POUR MODULES PHOTOVOLTAÏQUES SUR DES TOITS AVEC UNE TÔLE TRAPÉZOÏDALE

(30) Priorität: 06.06.2013 DE 202013005102 U
(43) Veröffentlichungstag der Anmeldung: 13.04.2016
(73) Patentinhaber: Schletter International B.V., 1077 ZA Amsterdam (NL); Dr. Zapfe GmbH, 83527 Kirchdorf (DE)
(72) Erfinder: SCHMID, Bernhard, 83562 Rechtmehring (DE); KOCH, Bernd, 83512 Wasserburg am Inn (DE)
(74) Vertreter: Thum, Bernhard
(86) Internationale Anmeldenummer: PCT/DE2014/000280
(87) Internationale Veröffentlichungsnummer: WO 2015/024542

(56) Entgegenhaltungen:
- DE-A1-102008 009 608
- DE-U1-202010 001 238
- DE-U1-202010 007 000
- DE-U1-202012 005 672
- JP-A- 2007 284 956
- US-A1- 2005 120 517

## Beschreibung

Die vorliegende Erfindung betrifft eine Vorrichtung zum Befestigen von Photovoltaikmodulen auf Dächern mit Trapezblech.

Photovoltaikmodule, kurz PV-Module genannt, werden häufig auf Dächern installiert, die mit Trapezblechen eingedeckt sind. Trapezbleche weisen trapezartige Sicken auf mit üblicherweise zwei Schrägseiten, einer Oberseite und einer offene Unterseite. Die Form der trapezartigen Sicken kann von Dach zu Dach sehr unterschiedlich sein, was individuell geformte oder universal anpassbare Befestiger erforderlich macht.

JP 2007-284956 A zeigt eine Vorrichtung zum Befestigen eines PV-Moduls auf einem Dach mit einem Trapezblech. Die Vorrichtung ist für unterschiedliche Sickenformen geeignet und umfasst zwei Seitenelemente, die an beiden Schrägseiten einer trapezartigen Sicke des Trapezblechs befestigt sind, und ein Stützteil mit einer Stützfläche, auf der das PV-Modul aufliegt. Die zwei Seitenelemente sind mittels zweier Scharniergelenke an dem Stützteil beweglich angelenkt und dadurch an Schrägseiten mit unterschiedlicher Neigung anpassbar. Außerdem weist die Vorrichtung einen Niederhalter auf, mit dem das PV-Modul gegen die Stützfläche geklemmt wird. Zum Klemmen sind der Niederhalter und das Stützteil über einen Gewindeschaft miteinander verbunden. Der Gewindeschaft verläuft mittig zwischen den zwei Scharniergelenken, wobei Freiräume zwischen dem Gewindeschaft und den zwei Scharniergelenken vorgesehen sind. Die Vorrichtung umfasst zahlreiche Bauteile und ist komplex aufgebaut und diffizil zu montieren. DE 20 2010 007 000 U1, DE 20 2009 003 862 U1 und DE 20 2010 001 238 U1 zeigen Vorrichtungen mit einem ähnlichen Prinzip, wobei zusätzlich ein Abstand zwischen den zwei Halteplatten variabel ist.

Es ist eine Aufgabe der Erfindung, eine Vorrichtung der eingangs genannten Art hinsichtlich Materialverbrauch, Fertigungsaufwand und Montagezeit unter Beibehaltung einer hohen Belastbarkeit zu verbessern.

Die Aufgabe wird mit der Vorrichtung gemäß Anspruch 1 gelöst. Demgemäß ist die Vorrichtung vorgesehen zum Befestigen mindestens eines PV-Moduls auf einem Dach mit einem Trapezblech. Das Trapezblech kann in bekannter Art eine trapezartige Sicke aufweisen mit zwei Schrägseiten und einer Oberseite.

Die Vorrichtung umfasst genau eine Halteplatte. Diese ist zur Befestigung an einer der zwei Schrägseiten vorgesehen ist. Die andere Schrägseite kann daher von der Vorrichtung völlig unberührt bleiben. Die Vorrichtung umfasst außerdem eine Stützfläche sowie einen Niederhalter zum Klemmen des mindestens einen PV-Moduls gegen die Stützfläche.

Außerdem umfasst die Vorrichtung einen Gewindeschaft, dem eine zentrale Schaftachse zugeordnet ist und der zum Betätigen des Niederhalters in Richtung zu der Stützfläche vorgesehen ist, und genau ein Scharniergelenk. Mittels des Scharniergelenks sind die Halteplatte und der Gewindeschaft miteinander drehbeweglich gekoppelt. Dem Scharniergelenk ist eine zentrale Drehachse zugeordnet und es weist eine Gelenkachse und eine Achsaufnahme auf. Die Gelenkachse kann an einer Achsaufnahme des Scharniergelenks aufgenommen und drehbeweglich gelagert sein. Zudem ist vorgesehen, dass der Gewindeschaft und das Scharniergelenk zueinander senkrecht angeordnet sind.

Charakteristisch für die Erfindung ist, dass die Vorrichtung nur eine einzige Halteplatte aufweist und daher nur eines einzigen Drehgelenks oder Scharniergelenks bedarf. Es ist der Halteplatte und dem Gewindeschaft zugeordnet. Materialverbrauch, Fertigungsaufwand und Montagezeit können dadurch erheblich reduziert werden. Darüber hinaus sind der Gewindeschaft und die Gelenkachse so angeordnet, dass eine gemeinsame Ebene gedanklich gegeben ist, in der sowohl der Gewindeschaft parallel verläuft als auch die Gelenkachse parallel verläuft. Dadurch kann der Kraftfluss in der Vorrichtung verbessert und die Materialmenge weiter verringert werden. Außerdem kann die Vorrichtung in einer vormontierten Baugruppe bereitgestellt werden.

Die Halteplatte kann an genau einer der zwei Schrägseiten der trapezartigen Sicke befestigt werden und zumindest in einem Abschnitt plattenartig ausgeführt sein und Öffnungen für Schrauben oder Niete enthalten. In einer Anordnung kann die Halteplatte parallel zu der Schrägseite positioniert sein und dort direkt oder mittels einer elastischen Schicht anliegen. Eine solche elastische Schicht kann aus EPDM-Kautschuk oder vergleichbaren Elastomeren bestehen.

Zwischen der Stützfläche und dem Niederhalter kann das mindestens eine PV-Modul angeordnet werden. Die Stützfläche ist zum Tragen des mindestens einen PV-Moduls vorgesehen. Die Stützfläche kann an der Halteplatte, der Gelenkachse oder der Achsaufnahme angeordnet sein. Die Stützfläche kann auch an einem Stützteil vorgesehen sein, das mit einem der vorgenannten Bauteile starr verbunden oder integral ausgeführt ist. Alternativ kann das Stützteil als separates Bauteil vorgesehen sein und auf der Halteplatte, der Gelenkachse oder der Achsaufnahme aufliegen. Außerdem ist es möglich, das PV-Modul gegen die Oberseite der trapezartigen Sicke zu klemmen, sodass die Stützfläche mittels der Oberseite oder einer darauf angeordneten Auflage ausgeführt ist.

Der Niederhalter kann in herkömmlicher Art sowohl als sogenannte Mittelklemme oder Endklemme ausgeführt sein, wie sie beispielsweise aus DE 200 14 058 U1, DE 20 2005 007 855 U1, DE 10 2009 024 424 A1, DE 20 2010 007 234 U1, DE 20 2012 101 633 U1 vielfach bekannt sind. Für den Niederhalter können daher Standardbauteile verwenden werden.

Mittelklemmen werden zum gemeinsamen Festklemmen zweier benachbarter PV-Module verwendet. Sie weisen zwei voneinander wegweisende horizontale Abschnitte auf zum Niederhalten der zwei benachbarten PV-Module. Meist sind auch zwei voneinander beabstandete vertikale Wangen vorgesehen, die die PV-Module seitlich festlegen können. Außerdem ist für gewöhnlich ein horizontaler Verbindungsabschnitt vorgesehen, der die vorgenannten Abschnitte und Wangen miteinander verbindet und eine Öffnung aufweist zum Durchführen einer Befestigungsschraube oder dergleichen. Im Unterschied zu Endklemmen liegen Mittelklemmen meist nur auf den zwei benachbarten PV-Modulen, nicht aber auf einer Stützfläche eines Montagegestells auf. Mittelklemmen können daher universal für verschieden hohe PV-Module verwendet werden.

Endklemmen werden zum Festklemmen eines einzelnen PV-Moduls am Ende einer Reihe von PV-Modulen verwendet. Sie weisen statt zwei nur einen horizontalen Abschnitt zum Niederhalten des PV-Moduls auf und eine vertikale Wange zum seitlichen Fassen des PV-Moduls sowie einen vertikalen Stützabschnitt, über den sich die Endklemme gegen eine Stützfläche eines Montagegestells abstützen kann. Die Stützfläche ist für gewöhnlich diejenige Stützfläche, auf der das PV-Modul aufliegt. Üblicherweise sind der vertikale Stützabschnitt und die vertikale Wange mittels eines horizontalen Verbindungsabschnitts integral miteinander verbunden. In dem horizontalen Verbindungsabschnitt kann eine Öffnung zum Durchführen einer Befestigungsschraube oder dergleichen enthalten sein. Wegen der Abstützung auf der Stützfläche des Montagegestells eignen sich Endklemmen nur innerhalb vergleichsweise enger Montagetoleranzen für PV-Module mit bestimmten Höhen, beispielsweise in einem Bereich von zwei Millimeter.

Der Gewindeschaft ist ein Schaft, der zumindest in einem Abschnitt ein Gewinde aufweist. Der Gewindeschaft kann zylindrisch geformt sein und den Niederhalter und die Stützfläche durchdringen oder auch zwischen den Teilflächen einer mehrteiligen Stützfläche verlaufen. Der Gewindeschaft kann Bestandteil einer gewöhnlichen Kopfschraube sein. Der Kopf einer solchen Kopfschraube weist üblicherweise einen größeren Durchmesser auf als das Gewinde des Gewindeschafts. Der Kopf kann den Niederhalter auf der Seite, die der Stützfläche abgewandt ist, axial festlegen. Alternativ zu der Kopfschraube kann eine Mutter verwendet werden, die in einem Gewindeeingriff mit dem Gewindeschaft steht und den Niederhalter anstelle des Schraubenkopfs axial einseitig festlegt.

Die Gelenkachse und die Achsaufnahme können zumindest abschnittsweise zylindrische oder kreiszylindrische Gleitflächen aufweisen, die zusammen eine Gleitpaarung bilden. Ein oder mehrere Segmente oder Sektoren eines Zylinders können für die Gleitflächen ausreichend sein, insbesondere wenn der Drehweg des Scharniergelenks begrenzt ist. Die Gleitflächen der Gelenkachse können konvex und diejenigen der Achsaufnahme konkav sein. Alternativ ist denkbar, dass die Gelenkachse hohl ist und konkave Gleitflächen aufweist und die Achsaufnahme entsprechend konvex ausgeführt ist, sodass und die Gelenkachse die Achsaufnahme umgreift. Unter zylindrisch wird auch allgemein zylindrisch verstanden, das heißt beispielsweise elliptisch oder prismatisch. Es ist denkbar, dass die Gelenkachse kantig ist und die Kanten die Gleitflächen bilden. Bevorzugt sind jedoch kreiszylindrische Gleitflächen.

Das Merkmal, dass eine gemeinsame Ebene gegeben ist, die sowohl den Gewindeschaft als auch die Gelenkachse parallel enthält, lässt sich alternativ folgender Maßen formulieren: Der Gewindeschaft mit einem ersten Radius und die Gelenkachse mit einem zweiten Radius kreuzen sich in einem Abstand der kleiner ist als die Summe aus dem ersten Radius und dem zweiten Radius. Vorzugsweise ist der Abstand kleiner als der erste Radius und/oder kleiner als der zweite Radius. Idealerweise ist der Abstand im Rahmen geeigneter Fertigungstoleranzen so gering wie möglich.

Der Gewindeschaft und die Gelenkachse sind zueinander senkrecht angeordnet, das heißt genauer, die zentrale Schaftachse und die zentrale Drehachse verlaufen senkrecht zueinander. Es versteht sich, dass zwei Geraden zueinander senkrecht sind, wenn deren Richtungsvektoren zueinander senkrecht sind. Demgemäß können zwei Geraden im Raum auch ohne gemeinsamen Schnittpunkt zueinander senkrecht sein.

Die Vorrichtung eignet sich besonders für gerahmte PV-Module. Es ist aber auch möglich, mit der Vorrichtung ungerahmte PV-Module zu befestigen. Außerdem eignet sich die Vorrichtung besonders für eine horizontale Lagerung von PV-Modulen. Das bedeutet eine Lagerung, bei der etwa horizontal verlaufende Rahmenabschnitte oder Kanten des PV-Moduls geklemmt werden. Denn in der Praxis sind Trapezbleche meist dergestalt geneigt angeordnet, dass die trapezartigen Sicken zur Ermöglichung des Ablaufs von Regenwasser zumindest mit einer geringen Neigung von oben nach unten verlaufen. Demgemäß sind die Niederhalter in einer Anordnung üblicherweise horizontal verlaufend ausgerichtet, das heißt quer zu den trapezartigen Sicken.

In einer Ausführungsform kann die zentrale Drehachse den Gewindeschaft oder eine gedachte Verlängerung desselben durchdringen oder mit anderen Worten schneiden. Die gedachte Verlängerung des Gewindeschafts kann koaxial und zylindrisch sein. Ergänzend oder alternativ kann die zentrale Schaftachse die Gelenkachse oder eine gedachte Verlängerung derselben durchdringen oder mit andern Worten schneiden. Die gedachte Verlängerung der Gelenkachse kann ebenfalls koaxial und zylindrisch sein.

In einer Weiterbildung können die zentrale Drehachse des Scharniergelenks und die zentrale Schaftachse des Gewindeschafts einander in einem Abstand kreuzen, der kleiner als ein Radius des Gewindeschafts ist, insbesondere kleiner als die Hälfte oder ein Drittel des Radius des Gewindeschafts. Ein solcher Abstand entspricht zweckmäßigen Fertigungstoleranzen für derartige Vorrichtung. Durch einen geringen Abstand kann der Kraftfluss möglichst direkt verlaufen und es können auf die Gelenkachse einwirkende Momente reduziert werden. Im Idealfall können die Drehachse und die zentrale Schaftachse des Gewindeschafts einander schneiden, das heißt der Abstand ist dann gleich Null.

Es ist vorgesehen, dass die Halteplatte zusammen mit der Achsaufnahme eine drehstarre Einheit bildet. Die Achsaufnahme kann dazu direkt an der Halteplatte befestigt oder angeformt oder integral vorgesehen sein. Die Halteplatte und die Achsaufnahme können daher einstückig herstellt sein. Der Gewindeschaft kann mittels eines Hilfsbauteils an der Gelenkachse festgelegt sein. Ein solches Hilfsbauteil kann selbst als Achsaufnahme wirken, sodass die Gelenkachse weder zur Halteplatte noch zum Gewindeschaft festgelegt ist. Es wird jedoch bevorzugt, wenn der Gewindeschaft zusammen mit der Gelenkachse eine weitere drehstarre Einheit bilden. Solche drehstarre Einheiten sind bezüglich der zentralen Drehachse relativ zueinander verdrehbar.

Es ist auch möglich, an der Gelenkachse eine integrale Anformung vorzusehen, an der der Gewindeschaft befestigt ist. Eine solche Anformung kann aus der Achsaufnahme heraus und optional um diese herum führen. In einer bevorzugten Weiterbildung ist vorgesehen, dass der Gewindeschaft direkt an der Gelenkachse befestigt ist. Eine direkte Befestigung kann beispielsweise durch Pressen, Schweißen, Kleben oder dergleichen erfolgen, wobei der Gewindeschaft mittig an der Gelenkachse befestigt .sein kann und somit beide zusammen eine T-Form bilden. Außerdem ist es möglich, dass der Gewindeschaft integral an der Gelenkachse vorgesehen ist.

Der Gewindeschaft kann mit der Gelenkachse in einem Gewindeeingriff stehen. Dadurch kann eine Klemmhöhe zwischen der Stützfläche und Niederhalter in einem weiten Bereich angepasst werden. Das ist besonders vorteilhaft, wenn der Gewindeschaft derjenige einer Kopfschraube ist. Es kann weiter von Vorteil sein, wenn der Durchmesser der Gelenkachse größer ist als ein Durchmesser des Gewindeschafts, insbesondere um einen Faktor 1.5 bis 2.5. Außerdem kann die Gelenkachse eine Öffnung mit einem Innengewinde aufweisen, wobei der Gewindeschaft mit dem Innengewinde in dem Gewindeeingriff steht.

Des Weiteren ist es möglich, dass die Gelenkachse eine Durchgangsöffnung mit einem Innengewinde aufweist und der Gewindeschaft mit' dem Innengewinde in dem Gewindeeingriff steht und der Gewindeschaft die Gelenkachse durchdringen kann. Dadurch kann die Klemmhöhe zwischen der Stützfläche und Niederhalter in einem besonders weiten Bereich angepasst werden, sodass bei einem vorgegebenen Niederhalter und einem vorgegebenen Gewindeschaft verschieden hohe PV-Module befestigt werden können, beispielsweise in einem Bereich von fünf Millimeter. Je nach Höhe des PV-Moduls kann der Gewindeschaft innerhalb des Durchgangslochs oder am Rand des Durchgansloch enden oder aber das Durchgangsloch passieren, sodass der Gewindeschaft beispielsweise wenige Millimeter übersteht. Dadurch kann mit wenigen Gewindeschäften verschiedener Länge eine große Bandbreite unterschiedlich hoher PV-Module befestigt werden. Das ist besonders vorteilhaft, wenn der Gewindeschaft derjenige einer Kopfschraube ist.

Die Achsaufnahme kann in einem dem Niederhalter zugewendeten Bereich ausgenommen sein, wobei der Gewindeschaft die Achsaufnahme dort durchdringt. Außerdem kann vorgesehen sein, dass die Achsaufnahme in einem dem Niederhalter abwendeten Bereich ebenfalls ausgenommen ist und der Gewindeschaft dort eindringen kann. Das kann den Anpassungsbereich für die Klemmhöhe bei vorgegebener Länge des Gewindeschafts weiter vergrößern.

In einer Ausführungsform ist die Stützfläche außen an der Achsaufnahme oder an der Halteplatte integral vorgesehen. Eine solche integrierte Stützfläche kann konvex gestaltet sein, insbesondere kreiszylindrisch, sodass bei unterschiedlich geneigter Schrägseite das PV-Modul stets tangential mit der Stützfläche zur Anlage kommt. Im Falle einer konvexen Achsaufnahme und einer konkaven Gelenkachse kann eine solche Stützfläche außen an der Gelenkachse integral vorgesehen und plan ausgeführt und senkrecht zu dem Gewindeschaft sein.

Außerdem ist es möglich, dass ein Stützteil mit der Stützfläche vorgesehen ist, wobei das Stützteil zwischen dem Scharniergelenk und dem Niederhalter angeordnet ist. Die Stützfläche ist folglich ein Teil der Oberfläche des Stützteils. Vorzugweise kann das Stützteil außen auf der Achsaufnahme gleiten. Außen bedeutet eine Seite der Achsaufnahme, die von der Gelenkachse abgewendet ist. Die Stützfläche an dem Stützteil kann in dieser Ausführungsform plan ausgeführt sein, sodass das PV-Modul dort in schonender Weise planar aufliegen kann. Der Gewindeschaft kann als Mitnehmer für das Stützteil wirken. Hierfür kann das Stützteil eine Durchgangsöffnung enthalten, die der Gewindeschaft senkrecht durchdringt.

Zum besseren Gleiten kann das Stützteil eine konkave Gleitfläche und die Achsaufnahme außen eine konvexe Gleitfläche aufweisen, wobei die konkave und die konvexe Gleitfläche zusammen eine Gleitpaarung bilden. Das Stützteil wird dadurch gut geführt, insbesondere wenn das Stützteil zusammen mit der Gelenkachse und dem Gewindeschaft mitgedreht wird. In einer weiteren Ausführungsform kann die Gelenkachse eine integrale Anformung aufweisen, die aus der Achsaufnahme heraus und um diese herum führt und die die Stützfläche trägt. Die Stützfläche kann hier ebenfalls plan sein und senkrecht zu dem Gewindeschaft sein.

In einer Variante, nicht Teil der vorliegenden Erfindung, ist vorgesehen, dass die Halteplatte zusammen mit der Gelenkachse eine drehstarre Einheit bildet. Die Gelenkachse kann direkt an der Halteplatte befestigt oder angeformt oder integral vorgesehen sein. Die Halteplatte und die Gelenkachse können daher einstückig herstellt sein. Außerdem kann der Gewindeschaft zusammen mit der Achsaufnahme eine weitere drehstarre Einheit bilden. Die Stützfläche kann außen auf der Achsaufnahme integral oder durch ein Stützteil vorgesehen und plan und senkrecht zu dem Gewindeschaft sein. In einer Weiterbildung ist vorgesehen, dass der Gewindeschaft direkt an der Achsaufnahme befestigt ist. Der Gewindeschaft kann mit der Achsaufnahme in einem Gewindeeingriff stehen. Die Achsaufnahme kann eine Öffnung mit einem Innengewinde aufweisen, wobei der Gewindeschaft mit dem Innengewinde in dem Gewindeeingriff steht. Außerdem ist es möglich, dass die Achsaufnahme eine Durchgangsöffnung mit einem Innengewinde aufweist und der Gewindeschaft mit dem Innengewinde in dem Gewindeeingriff steht und der Gewindeschaft die Achsaufnahme durchdringen kann. Das ist besonders vorteilhaft, wenn der Gewindeschaft derjenige einer Kopfschraube ist. Die Gelenkachse kann in einem Bereich neben der zentralen Schaftachse freigestellt sein.

In einer Ausführungsform ist vorgesehen, dass die Halteplatte eine Ausnehmung aufweist, in die der Gewindeschaft eindringen kann. Dadurch kann der vorgenannte Anpassungsbereich noch weiter vergrößert werden.

In einer Ausführungsform kann eine Schraube mit dem Gewindeschaft und eine Schraubenkopf vorgesehen sein, wobei der Schraubenkopf den Niederhalter axial festlegt. Der Schraubenkopf kann den Niederhalter auf der Seite, die der Stützfläche abgewendet ist, axial festlegen. Diese Ausführungsform eignet sich besonders, wenn der Gewindeschaft der Schraube im Gewindeeingriff mit der Gelenkachse oder der Achsaufnahme steht. Auf diese Weise können mittels einer Schraube vorgegebener Länge unterschiedlich hohe PV-Module geklemmt werden, beispielsweise in einem Bereich von fünf Millimeter.

Alternativ zum Schraubenkopf kann eine Schraubenmutter vorgesehen sein, die im Gewindeeingriff mit dem Gewindeschaft steht und den Niederhalter auf der Seite, die der Stützfläche abgewendet ist, axial festlegt. Die Schraubenmutter kann bevorzugt eine sogenannte Hutmutter sein. Hutmuttern erlauben im Gegensatz zu gewöhnlichen Schraubmuttern einen Angriff ohne seitlichen Umgriff, was Montageraum spart und einen schmale Gestaltung des Niederhalters zulässt. Diese Alternative mit einer Schraubenmutter eignet sich besonders, wenn der Gewindeschaft an der Gelenkachse oder der Achsaufnahme unlösbar befestigt ist, sei es durch integrale Bauweise oder durch Einpressen, Kleben, Schweißen oder dergleichen.

In einer Ausführungsform ist mindestens ein Endanschlag vorgesehen, der den Drehweg zwischen der Gelenkachse und der Achsaufnahme begrenzt. Der Endanschlag kann unzulässige Montagestellungen vermeiden, beispielsweise bei Schrägseiten mit einer Neigung von weniger als 45 Grad. Der Endanschlag kann an der Außenseite der Achsaufnahme vorgesehen sein und mit dem vorgenannten Stützteil zusammenwirken.

In einer Ausführungsform weist die Halteplatte einen Anschlag auf, der zum Anlegen auf die Oberseite vorgesehen ist. Ein solcher Anschlag kann als Positionierhilfe wirken während des Anlegens und der Befestigung der Halteplatte. Außerdem kann mit Hilfe des Anschlags bei unterschiedlich geformten Sicken stets eine vergleichbare Positionierung bezüglich der Kante zwischen der Schrägseite und der Oberseite erreicht werden. Ein Abstand zwischen der Oberseite der trapezartigen Sicke und der Unterseite des PV-Modul bleibt daher im Bereich weniger Millimeter konstant.

In einer Ausführungsform kann zwischen der Stützfläche und dem Niederhalter eine Feder vorgesehen sein. Die Feder kann koaxial am Gewindeschaft angeordnet sein und den Niederhalter in eine maximal offene Stellung drücken, sodass der Niederhalter während des Einführens eines PV-Moduls zwischen die Stützfläche und den Niederhalter nicht eigens angehoben zu werden braucht.

In einer Ausführungsform kann mindestens die Halteplatte, die Achsaufnahme, die Gelenkachse, das Stützteil oder der Niederhalter ein Extrusionswerkstück sein, bevorzugt aus korrosionsbeständigem Aluminium. Ferner ist es möglich, die Halteplatte zusammen mit der Achsaufnahme oder der Gelenkachse zu extrudieren. Das Stützteil kann zusammen mit der Gelenkachse extrudiert sein.

In einer Anordnung mit der Vorrichtung und einem Trapezblech mit einer trapezartigen Sicke mit zwei Schrägseiten und einer Oberseite kann die Halteplatte an einer der zwei Schrägseiten befestigt sein, wobei die gemeinsame Ebene diese eine Schrägseite durchdringt. Die gemeinsame Ebene verläuft demnach seitlich an der Oberseite vorbei ohne diese zu durchdringen. Alternativ oder ergänzend kann vorgesehen sein, dass die zentrale Schaftachse diese eine Schrägseite durchdringt.

Nachfolgend wird ein Ausführungsbeispiel der Erfindung anhand von Zeichnungen näher erläutert. Es zeigen:
**Fig. 1** eine Schrägansicht einer Anordnung mit zwei PV-Modulen, die mittels mehrerer erfindungsgemäßer Vorrichtungen auf einem Trapezblech befestigt sind,
**Fig. 2** eine Vorderansicht der Anordnung gemäß **Fig. 1****,**
**Fig. 3** eine Schrägansicht der Anordnung gemäß einem Ausschnitt der **Fig. 1** mit einer der Vorrichtungen im Detail,
**Fig. 4** eine Seitenansicht der Anordnung im Bereich der Vorrichtung gemäß **Fig. 3**
**Fig. 5** eine Seitenansicht einer Anordnung mit einem PV-Modul, das mittels der Vorrichtung gemäß **Fig. 3** auf einem anderen Trapezblech befestigt ist,
**Fig. 6** eine Explosionsansicht der Vorrichtung gemäß **Fig. 1****.**

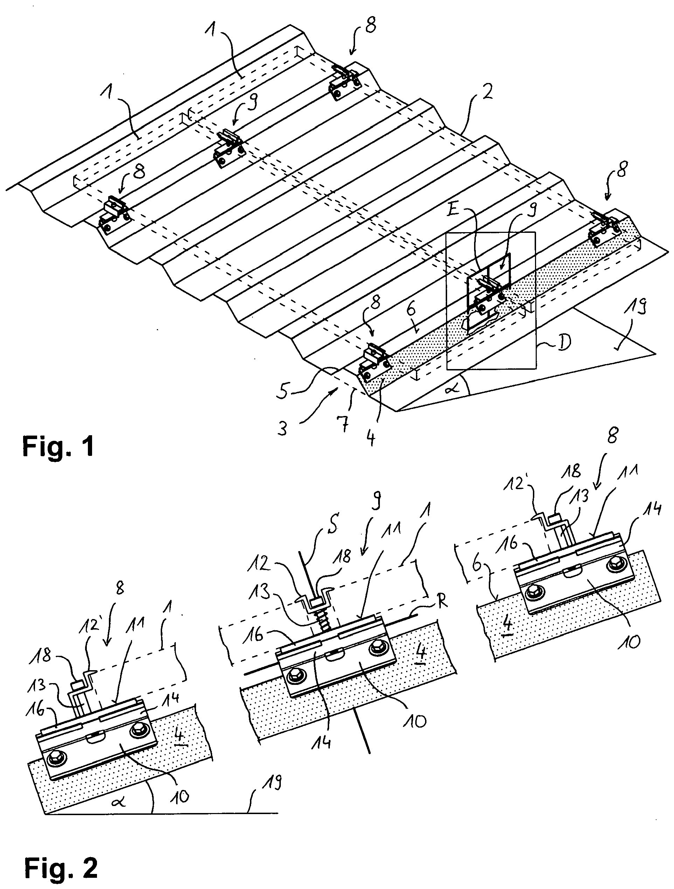

Die in **Fig. 1** bis **Fig. 4** dargestellte Anordnung umfasst zwei PV-Module **1,** die mittels mehrerer erfindungsgemäßer Vorrichtungen **8** und **9** auf einem Trapezblech **2** angeordnet sind. Das Trapezblech **2** enthält in bekannter Art zur Versteifung mehrere trapezartige Sicken **3** mit jeweils zwei Schrägseiten **4** und **5,** einer Oberseite **6** und einer offene Unterseite **7.** Die Schrägseiten **4** und **5** konvergieren zu der Oberseite **6** und sind mittels dieser verbunden. Mit dem Trapezblech **2** kann ein nicht näher dargestelltes Schrägdach eingedeckt sein. Das Trapezblech **2** ist daher zu einer horizontalen Ebene **19** in einem Winkel **α** geneigt. Die trapezartigen Sicken **3** verlaufen etwa parallel zu der Neigung des Trapezblechs **2** von oben nach unten, sodass Regenwasser ungehindert abfließen kann.

Die PV-Module **1** sind schematisch mit gestrichelten Linien dargestellt und weisen einen nicht näher ersichtlichen Rahmen auf. Die PV-Module sind horizontal gelagert, das bedeutet sie sind an deren horizontal verlaufenden Rahmenabschnitte befestigt. Die PV-Module **1** bilden in der Richtung der trapezartigen Sicken **3** eine kurze Modulreihe. Jedes PV-Modul **1** ist an vier Stellen an dem Trapezblech **2** befestigt. Die horizontalen verlaufenden Rahmenabschnitte am Ende der Modulreihe sind mit jeweils zwei Vorrichtungen **8** befestigt. Die horizontalen verlaufenden Rahmenabschnitte, die im Inneren der Modulreihe einander gegenüberstehen, sind gemeinsam mit zwei Vorrichtung **9** befestigt.

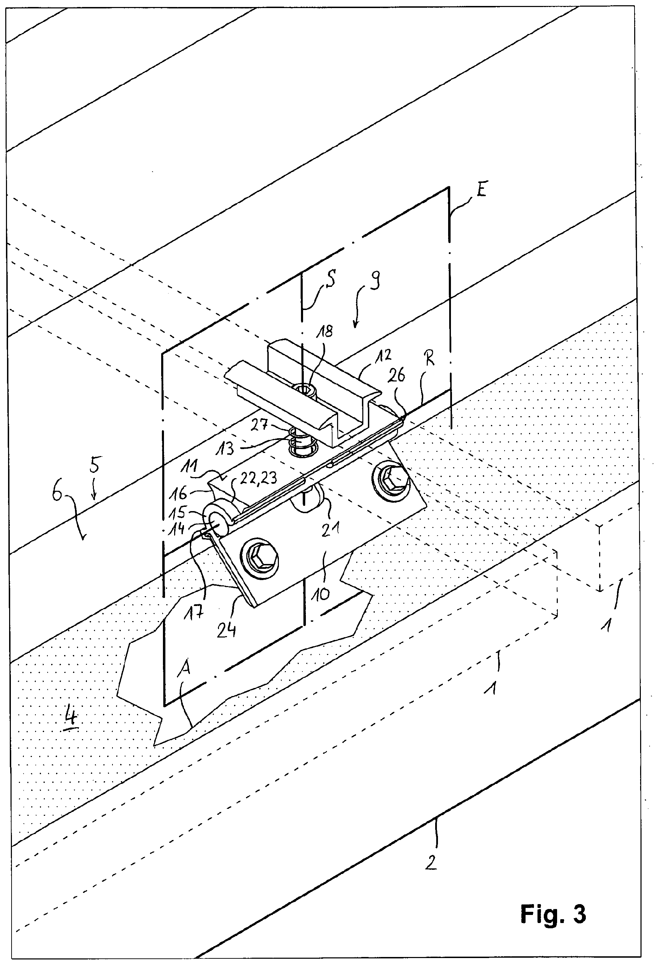

Eine der zwei Vorrichtungen **9** ist in **Fig. 3****,** **Fig. 4** und **Fig. 6** im Detail ersichtlich. Die Vorrichtung **9** enthält eine einzige Halteplatte **10.** Sie ist ausschließlich an der Schrägseite **4** der trapezartigen Sicken **3** befestigt. Diese Schrägseite **4** ist zur Veranschaulichung gepunktet dargestellt. Die andere Schrägseite **5** dieser trapezartigen Sicke 3 bleibt von der Vorrichtung **9** gänzlich unberührt.

Des Weiteren enthält die Vorrichtung **9** ein Stützteil **16** mit einer planen Stützfläche **11** zum Tragen der PV-Module **1.** Im verbauten Zustand liegen die PV-Module **1** mit ihren horizontal verlaufenden Rahmenabschnitten auf der Stützfläche **11** auf. Die Vorrichtung **9** enthält außerdem einen Niederhalter **12** zum Klemmen der PV-Module **1** gegen die Stützfläche **11**. Der Niederhalter **12** der Vorrichtung **9** ist als sogenannte Mittelklemme ausgeführt. Die Niederhalter **12'** der Vorrichtungen **8** sind hingegen als sogenannte Endklemme ausgeführt. Die Vorrichtung **9** umfasst ferner eine Schraube mit einem Gewindeschaft **13** und einem Schraubenkopf **18.** Dem Gewindeschaft **13** ist eine zentrale Schaftachse **S** gedanklich zugeordnet. Der Gewindeschaft **13** ist kreiszylindrisch und weist ein Außengewinde an einem dem Schraubenkopf **18** entgegengesetzten Endabschnitt auf. Die Schraube einschließlich des Gewindeschafts **13** ist zum Betätigen des Niederhalters **12** in Richtung zu der Stützfläche **11** vorgesehen. Der Gewindeschaft **13** durchdringt den Niederhalter **12** sowie das Stützteil **16** einschließlich der Stützfläche **11** durchgehend und in senkrechter Weise. Der Schraubenkopf **18** liegt auf einer der Stützfläche **11** abgewandten Seite des Niederhalters **12** an, sodass der Niederhalter **12** mittels der Schraube axial einseitig festgelegt ist.

Die Vorrichtung **9** enthält außerdem ein einziges Scharniergelenk. Es ist der Halteplatte **10** zugeordnet. Das Scharniergelenk belässt abgesehen von Spieltoleranzen und einer geringen axialen Verschiebbarkeit nur einen rotatorischen Freiheitsgrad. Es kann auch als Drehgelenk bezeichnet werden. Dem Scharniergelenk ist eine zentrale Drehachse **R** gedanklich zugeordnet. Mittels des Scharniergelenks sind die Halteplatte **10** und der Gewindeschaft **13** bezüglich der zentralen Drehachse **R** miteinander drehbeweglich gekoppelt.

Das Scharniergelenk weist eine Gelenkachse **14** und eine Achsaufnahme **15** auf, wobei die Gelenkachse **14** in der Achsaufnahme **15** aufgenommen und drehbeweglich gelagert ist. Die Achsaufnahme **15** weist innen eine konkav kreiszylindrische Gleitfläche über einen Sektor von etwa 190 Grad auf und ist in dem restlichen Sektor offen ausgeführt. Eine schmale Halteleiste an einem Rand der Achsaufnahme **15** blockiert ein radiales Entweichen der Gelenkachse **14** aus der Achsaufnahme **15.** Zum Fügen ist die Gelenkachse **14** axial in die Achsaufnahme **15** einzuführen. Die Gelenkachse **14** ist als Rundbolzen ausgeführt und weist konvexe kreiszylindrische Gleitflächen auf.

Die Achsaufnahme **15** ist an der Halteplatte **10** integral vorgesehen. So sind die Achsaufnahme **15** und die Halteplatte **10** zusammen in einem einzigen Bauteil ausgeführt und bilden eine erste drehstarre Einheit des Scharniergelenks. Die Achsaufnahme **15** und die Halteplatte **10** sowie die Gelenkachse **14** verlaufen parallel zu der trapezartigen Sicke **3.**

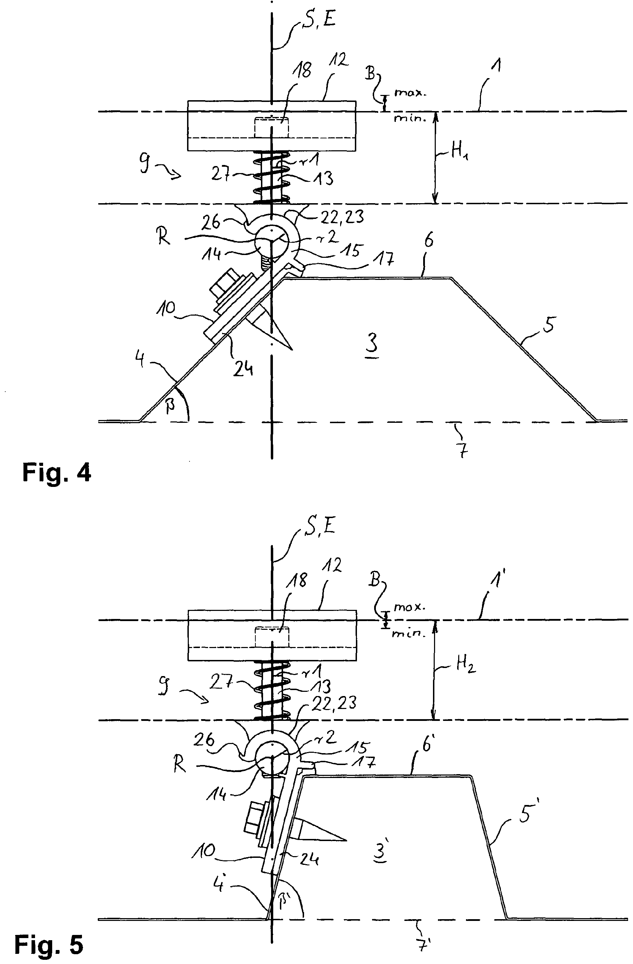

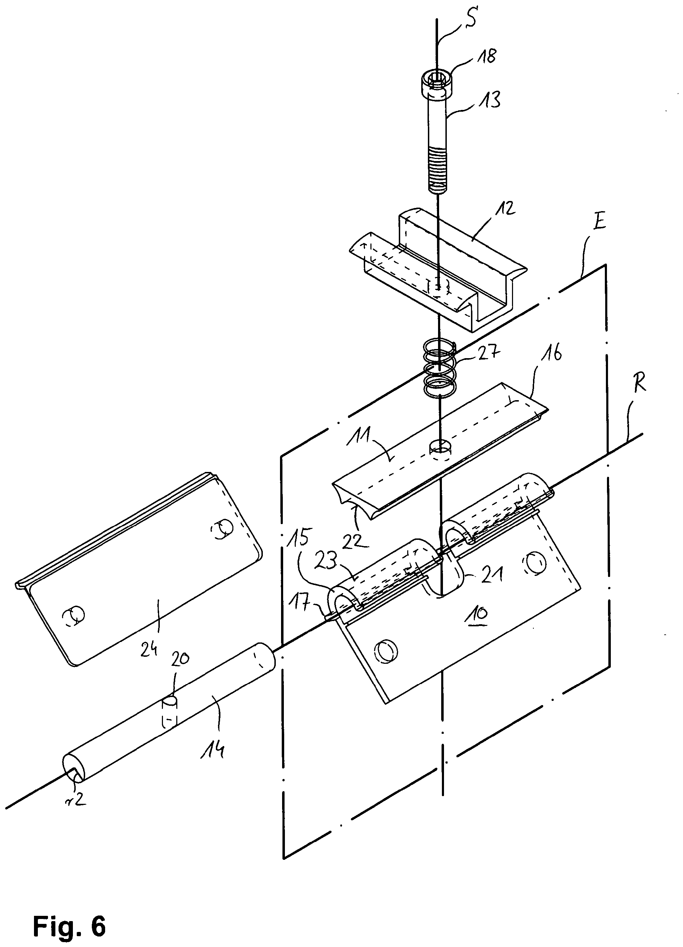

Wie insbesondere aus **Fig. 4** und **Fig. 6** ersichtlich ist, sind der Gewindeschaft **13** und die Gelenkachse **14** senkrecht zueinander angeordnet, das heißt genauer, die zentrale Schaftachse **S** und die zentrale Drehachse **R** sind zueinander senkrecht angeordnet. Besonders charakteristisch ist, dass eine gemeinsame Ebene **E** gedanklich gegeben ist, in der sowohl der Gewindeschaft **13** parallel verläuft als auch die Gelenkachse **14** parallel verläuft. Die gemeinsame Ebene **E** ist mit anderen Worten sowohl zum Gewindeschaft **13** parallel als auch zur Gelenkachse **14** parallel und schneidet sowohl den Gewindeschaft **13** als auch die Gelenkachse **14.** Anders gesagt, kreuzen sich der Gewindeschaft **13** und die Gelenkachse **14** in einem Abstand, der kleiner ist als die Summe des Radius **r1** des Gewindeschafts **13** und des Radius **r2** der Gelenkachse **14**. Zur Veranschaulichung ist die gemeinsame Ebene **E** als in **Fig. 4** und **Fig. 6** als Rechteck mit strichpunktierten Linien dargestellt

Im vorliegenden Beispiel ist der Abstand derart gering, dass die zentrale Drehachse **R** den Gewindeschaft **13** durchdringt, und die zentrale Schaftachse **S** die Gelenkachse **14** durchdringt, und der Abstand im Rahmen einer geeigneten Fertigungstoleranz kleiner als ein Drittel des Radius des Gewindeschafts **13** ist. In der Zeichnung ist der Abstand zwischen der zentralen Drehachse **R** und der zentralen Schaftsachse **S** gleich Null, sodass sich die zentrale Drehachse **R** und die zentrale Schaftsachse **S** darin in einem einzigen Punkt schneiden. Die Ebene **E** enthält daher sowohl die zentrale Schaftachse **S** als auch die zentrale Drehachse **R.**

Der Gewindeschaft **13** ist zentral zu der Gelenkachse **14** vorgesehen, sodass diese zusammen eine T-Gestalt bilden. Die Schraube mit dem Gewindeschaft **13** ist außerdem direkt an der Gelenkachse **14** befestigt, das heißt genauer, der Gewindeschaft **13** steht mit der Gelenkachse **14** in einem Gewindeeingriff. Die Schraube mit dem Gewindeschaft **13** und die Gelenkachse **14** bilden daher eine zweite drehstarre Einheit des Scharniergelenks. In der Mitte der Gelenkachse **14** ist eine Durchgangsöffnung mit einem Innengewinde enthalten, mit dem der Gewindeschaft **13** in dem Gewindeeingriff steht. Hierfür ist der Durchmesser der Gelenkachse **14** etwa um den Faktor Zwei größer gewählt als der Durchmesser des Gewindeschaftes **13.** Der Gewindeschaft **13** kann die Durchgangsöffnung passieren, sodass bei vorgegebener Länge des Gewindeschafts **13** dennoch ein großer Klemmbereich für verschieden hohe PV-Module **1** gegeben ist.

Der Gewindeschaft **13** durchdringt eine Wand der Achsaufnahme **15** mindestens ein Mal, nämlich in einem dem Niederhalter **12** zugewendeten und optional in einem dem Niederhalter **12** abgewendeten Bereich, falls der Gewindeschaft **13** das Durchgangsloch in der Gelenkachse **14** passiert. Die Wand der Achsaufnahme **15** ist in diesen Bereichen ausgenommen. Außerdem weist die Halteplatte **10** eine Ausnehmung **21** auf, in die das freie Ende des Gewindeschafts **13** bei der Montage erforderlichenfalls eindringen kann, wie in insbesondere **Fig. 4** zu entnehmen ist. Dadurch kann einen Anpassungsbereich **B** für die Klemmhöhe **H₁** zwischen der Stützfläche **11** und dem Niederhalter **12** noch weiter vergrößert werden, sodass bei einem vorgegebener Länge des Gewindeschafts **13** unterschiedlich hohe PV-Module **1** befestigt werden können, beispielsweise in einem Bereich von fünf Millimeter. Die Höhe des PV-Moduls **1,** das heißt genauer die Höhe dessen Rahmens, stimmt mit der Klemmhöhe **H₁** überein.

Das Stützteil **16** ist zwischen der Achsaufnahme **15** und dem Niederhalter **12** angeordnet und liegt außen auf der Achsaufnahme **15** auf, wie im Detail aus **Fig. 3****,** **Fig. 4** und **Fig. 6** ersichtlich ist. Zwischen dem Stützteil **16** und der Achsaufnahme **15** ist eine Gleitpaarung vorgesehen mit einer konkav kreiszylindrischen Gleitfläche **22** an dem Stützteil **16** und einer konvex kreiszylindrische Gleitfläche **23** außen an der Achsaufnahme **15.** Der Gewindeschaft **13** durchdringt das Stützteil **16,** sodass das Stützteil **16** bei einer Drehung des Gewindeschafts **13** um die zentrale Drehachse **R** mitgedreht wird. Das Stützteil **16** und der Niederhalter **12** sind daher ebenfalls Bestandteil der zweiten drehstarren Einheit des Scharniergelenks.

Zur Montage der Vorrichtung **9** wird die Halteplatte **10** mittels Schrauben an der Schrägseite **4** befestigt. Die Halteplatte **10** enthält hierfür vorgegebene Bohrungen zum Durchführen der Schrauben und ist im verbauten Zustand flächenparallel zur Schrägseite **4** positioniert. Zum Oberflächenschutz der trapezartigen Sicke **3** und zum Abdichten gegen Eintritt von Regenwasser umfasst die Vorrichtung eine elastische Schicht **24.** Die elastische Schicht **24** ist insbesondere in **Fig. 4** ersichtlich. Die elastische Schicht **24** ist an der Halteplatte vorfixiert und besteht aus einem EPDM-Kautschuk und ist im verbauten Zustand zwischen der Halteplatte **10** und der Schrägseite **4** angeordnet. Die Halteplatte **10** liegt folglich mittels der elastischen Schicht **24** an der Schrägseite **4** an.

Um die Positionierung der Halteplatte **10** zu erleichtern und zu vereinheitlichen, weist die Halteplatte **10** einen Anschlag **17** auf. Der Anschlag **17** ist als schmale Leiste ausgeführt und an der Halteplatte **10** auf derjenigen Seite, die der Schrägseite **4** zugewandt ist, integral angeformt. Die elastische Schicht **24** erstreckt sich bis unter den Anschlag **17,** sodass der Anschlag **17** im verbauten Zustand über die elastische Schicht **24** auf der Oberseite **6** der trapezartigen Sicke **3** aufliegt.

Die Halteplatte **10** ist einschließlich der Achsaufnahme **15** und dem Anschlag **17** ein Extrusionsteil, wobei beispielsweise die Öffnungen in Halteplatte **10** und die Ausnehmung **21** nachträglich eingebracht wurden. Auch die Gelenkachse **14**, das Stützteil **16 und** der Niederhalter **12** sind jeweils Extrusionsteile, wobei deren Durchgangsöffnungen nachträglich eingebracht worden sind.

Zur Befestigung der PV-Module **1** werden diese zwischen die Stützfläche **11** und dem Niederhalter **12** eingeführt und auf die Stützfläche **11** aufgelegt. Hierbei wird der Niederhalter **12** und damit auch die Schraube mit dem Gewindeschaft **13** und der Gelenkachse **14** sowie das Stützteil **16** verschwenkt, sodass der Gewindeschaft **13** senkrecht zu der Oberseite **6** und zu den PV-Modulen **1** ist. Anschließend wird die Schraube mit dem Gewindeschaft **13** mit einem geeigneten Schraubwerkzeug betätigt, sodass der Niederhalter **12** die PV-Module **1** gegen die Stützfläche **11** niederhält und klemmt. Mittels des Gewindeschaftes **13** wird demgemäß der Abstand zwischen dem Niederhalter **12** und der Stützfläche **11** verringert. Im geklemmten Zustand ist der Gewindeschaft **13** auf Zug beansprucht. Die zentrale Schaftachse **S** als auch die gemeinsame Ebene **E** durchdringen die Schrägseite **4.** Die Schaftachse verläuft demnach seitlich an der Oberseite **6** vorbei ohne diese oder die andere Schrägseite **5** zu durchdringen.

Um unzulässige Montagestellungen zu vermeiden ist ein Endanschlag **26** vorgesehen, der an einem Rand an der Außenseite angeformt ist und der den Drehweg des Stützteils **16** gegenüber der Achsaufnahme **15** begrenzt. Da das Stützteil **16** über den Gewindeschaft **13** mit der Gelenkachse **14** drehstarr bezüglich der zentralen Drehachse R verbunden ist, ist indirekt auch der Drehweg der Gelenkachse **14** begrenzt. In der in **Fig. 4** dargestellten Winkelstellung liegt das Stützteil **16** an dem Endanschlag **26** an. Eine Befestigung auf anderen flacheren Schrägseiten mit einem Winkel **β** zur Unterseite **7** kleiner als 45° wird dadurch vermieden.

Die Vorrichtung **9** weist außerdem eine Feder **27** auf, die zwischen der Stützfläche **11** und dem Niederhalter **12** wirkt und an dem Gewindeschaft **13** koaxial angeordnet ist. Die Feder spannt den Niederhalter **12** vor in eine offene Position, sodass der Niederhalter **12** beim Einführen des PV-Moduls **1** zwischen die Stützfläche **11** und den Niederhalter **12** nicht eigens angehoben zu werden braucht. Die Vorrichtung **9** kann so wie in **Fig. 6** dargestellt in einer einzigen Baugruppe komplett vormontiert sein.

Die in **Fig. 1** und **Fig. 2** dargestellten Vorrichtungen **8** unterscheiden sich von der Vorrichtung **9** darin, dass deren Niederhalter **12'** als Endklemme ausgeführt ist und auf keine Feder am Gewindeschaft **13** vorgesehen ist.

**Fig. 4** und **Fig. 5** verdeutlichen in der Zusammenschau die Variabilität der Vorrichtung **9.** Bei der in **Fig. 5** in eine ähnlichen Seitenansicht dargestellten Anordnung wird dieselbe Vorrichtung **9** verwendet, jedoch ist eine anders geformte trapezartige Sicke **3'** mit zwei Schrägseiten **4'** und **5',** einer Oberseite **6'** und einer offenen Unterseite **7'** vorgesehen. Die Schrägseite **4'** ist deutlich steiler gestaltet als die Schrägseite **4** gemäß **Fig. 3****.** Der Winkel **β'** zu der Unterseite **7'** beträgt etwa 75 Grad. Außerdem ist in der Anordnung gemäß **Fig. 5** ein PV-Modul **1'** mit einer größeren Rahmenhöhe gegeben. So ist auch die Klemmhöhe **H₂** größer als die Klemmhöhe **H₁** gemäß **Fig. 4****.** Je nach Höhe de PV-Moduls **1** bzw. **1'** kann der Gewindeschaft **13** wie in **Fig. 5** nahe an einem Rand des Durchgangslochs **20** enden oder wie in **Fig. 4** das Durchgangsloch **20** passieren, sodass der Gewindeschaft **13** einige Millimeter übersteht und in die Ausnehmung **21** eindringt. Wird der Anpassungsbereich **B** verlassen, kann eine nächst kürzere oder längere Schraube gewählt werden, beispielsweise in einer Schrittweite von fünf Millimeter.

## Patentansprüche

1. Vorrichtung zum Befestigen mindestens eines PV-Moduls (1) auf einem Dach, das ein Trapezblech (2) mit einer trapezartigen Sicke (3) mit zwei Schrägseiten (4, 5) und einer Oberseite (6) umfasst, wobei die Vorrichtung aufweist:
- genau eine Halteplatte (10) zur Befestigung an einer der zwei Schrägseiten (4, 5),
- eine Stützfläche (11),
- einen Niederhalter (12) zum Klemmen des mindestens einen PV-Moduls (1) gegen die Stützfläche (11),
- einen Gewindeschaft (13), dem eine zentrale Schaftachse (S) zugeordnet ist und der zum Betätigen des Niederhalters (12) in Richtung zu der Stützfläche (11) vorgesehen ist,
- genau ein Scharniergelenk (R, 14, 15), dem eine zentrale Drehachse (R) zugeordnet ist und mittels dem die genau eine Halteplatte (10) und der Gewindeschaft (13) miteinander drehbeweglich gekoppelt sind und das eine Gelenkachse (14) und eine Achsaufnahme (15) aufweist,
wobei der Gewindeschaft (13) einen ersten Radius (r1) und die Gelenkachse (14) einen zweiten Radius (r2) aufweist, wobei der Gewindeschaft (13) und die Gelenkachse (14) zueinander senkrecht angeordnet sind und sich derart kreuzen, dass ein Abstand zwischen der zentralen Drehachse (R) und der zentralen Schaftachse (S) kleiner als die Summe aus dem ersten Radius (r1) und dem zweiten Radius (r2) ist, wobei die genau eine Halteplatte (10) zusammen mit der Achsaufnahme (15) eine drehstarre Einheit bildet.

2. Vorrichtung nach Anspruch 1, **dadurch gekennzeichnet, dass** die zentrale Drehachse (R) und die zentrale Schaftachse (S) einander in einem Abstand kreuzen, der kleiner als der erste Radius (r1) des Gewindeschafts (13) ist.

3. Vorrichtung nach einem der vorhergehenden Ansprüche, **dadurch gekennzeichnet, dass** der Gewindeschaft (13) mit der Gelenkachse (14) in einem Gewindeeingriff steht.

4. Vorrichtung nach dem vorhergehenden Anspruch, **dadurch gekennzeichnet, dass** die Gelenkachse (14) eine Durchgangsöffnung (20) mit einem Innengewinde aufweist und der Gewindeschaft (13) mit dem Innengewinde in dem Gewindeeingriff steht und der Gewindeschaft (13) die Gelenkachse (14) durchdringen kann.

5. Vorrichtung nach einem der vorhergehenden Ansprüche, **dadurch gekennzeichnet, dass** ein Stützteil (16) mit der Stützfläche (11) vorgesehen ist, wobei das Stützteil (16) zwischen dem genau einen Scharniergelenk (R, 14, 15) und dem Niederhalter (12) angeordnet ist.

6. Vorrichtung nach dem vorhergehenden Anspruch, **dadurch gekennzeichnet, dass** das Stützteil (16) eine konkave Gleitfläche (22) und die Achsaufnahme (15) außen eine konvexe Gleitfläche (23) aufweist, die zusammen eine Gleitpaarung bilden.

7. Vorrichtung nach einem der vorhergehenden Ansprüche, **dadurch gekennzeichnet, dass** eine Schraube mit dem Gewindeschaft (13) und einem Schraubenkopf (18) vorgesehen ist, wobei der Schraubenkopf (18) den Niederhalter (12) axial festlegt.

8. Vorrichtung nach einem der vorhergehenden Ansprüche, **dadurch gekennzeichnet, dass** die genau eine Halteplatte (10) eine Ausnehmung (21) aufweist, in die der Gewindeschaft (13) eindringen kann.

9. Vorrichtung nach einem der vorhergehenden Ansprüche, **dadurch gekennzeichnet, dass** die genau eine Halteplatte (10) einen Anschlag (17) aufweist, der zum Anlegen auf die Oberseite (6) vorgesehen ist.

10. Anordnung mit einer Vorrichtung nach einem der vorhergehenden Ansprüche und mit einem Trapezblech (2) mit einer trapezartigen Sicke (3) mit zwei Schrägseiten (4, 5) und einer Oberseite (6), **dadurch gekennzeichnet, dass** die genau eine Halteplatte (10) an einer der zwei Schrägseiten (4, 5) befestigt ist, und eine gemeinsame Ebene (E) diese eine Schrägseite (4) durchdringt.

## Claims

1. A device for fastening at least one PV module (1) to a roof,
the roof including a trapezoidal metal sheet (2) with a trapezoidal corrugation (3) having two sloped sides (4, 5) and a top side (6), wherein the device has:
- one mounting plate (10) for fastening to one of the two sloped sides (4, 5),
- a support surface (11),
- a hold-down element (12) for clamping the at least one PV module (1) against the support surface (11),
- a threaded shank (13) that is associated with a central shank axis (S) and provided for actuating the hold-down element (12) in the direction of the support surface (11),
- one hinge joint (R, 14, 15) which is associated with a central rotational axis (R), and by means of which the one mounting plate (10) and the threaded shank (13) are rotationally coupled to one another, and which has an articulated axis (14) and an axis receptacle (15),
wherein the threaded shank (13) has a first radius (r1) and the articulated axis (14) has a second radius (r2), the threaded shank (13) and the articulated axis (14) being situated perpendicularly with respect to one another and intersecting in such a way that the distance between the central rotational axis (R) and the central shank axis (S) is less than the sum of the first radius (r1) and the second radius (r2), the one mounting plate (10) together with the axis receptacle (15) forming a torsionally rigid unit.

2. The device according to Claim 1, **characterized in that** the central rotational axis (R) and the central shank axis (S) intersect one another with a spacing that is less than the first radius (r1) of the threaded shank (13).

3. The device according to one of the preceding claims, **characterized in that** the threaded shank (13) is in thread engagement with the articulated axis (14).

4. The device according to the preceding claim, **characterized in that** the articulated axis (14) has a through opening (20) with a female thread, and the threaded shank (13) is in thread engagement with the female thread, and the threaded shank (13) can pass through the articulated axis (14).

5. The device according to one of the preceding claims, **characterized in that** a support part (16) is provided with the support surface (11), the support part (16) being situated between the one hinge joint (R, 14, 15) and the hold-down element (12).

6. The device according to the preceding claim, **characterized in that** the support part (16) has a concave sliding surface (22) and the axis receptacle (15) has an external convex sliding surface (23), which together form a slide pairing.

7. The device according to one of the preceding claims, **characterized in that** a screw is provided with the threaded shank (13) and a screw head (18), wherein the screw head (18) axially fixes the hold-down element (12).

8. The device according to one of the preceding claims, **characterized in that** the one mounting plate (10) has a recess (21) into which the threaded shank (13) can penetrate.

9. The device according to one of the preceding claims, **characterized in that** the one mounting plate (10) has a stop (17) that is provided for contacting the top side (6).

10. An arrangement having a device according to one of the preceding claims, and having a trapezoidal metal sheet (2) with a trapezoidal corrugation (3) having two sloped sides (4, 5) and a top side (6), **characterized in that** the one mounting plate (10) is fastened to one of the two sloped sides (4, 5), and a shared plane (E) passes through this one sloped side (4).

## Revendications

1. Dispositif de fixation d'au moins un module PV (1) sur un toit, qui comprend une tôle trapézoïdale (2) présentant une nervure trapézoïdale (3) avec deux côtés obliques (4, 5) et un côté supérieur (6), le dispositif présentant :
- exactement une plaque de retenue (10) destinée à être fixée sur l'un des deux côtés obliques (4, 5),
- une surface d'appui (11),
- un élément de maintien (12) pour serrer ledit au moins un module PV (1) contre la surface d'appui (11),
- une tige filetée (13), à laquelle est associé un axe de tige central (S) et qui est prévue pour actionner l'élément de maintien (12) en direction de la surface d'appui (11),
- exactement une articulation à charnière (R, 14, 15), à laquelle est associé un axe de rotation central (R) et au moyen de laquelle ladite exactement une plaque de retenue (10) et la tige fileté (13) sont accouplées de manière mobile en rotation et qui présente un axe d'articulation (14) et un logement d'axe (15),
dans lequel la tige filetée (13) présente un premier rayon (r1) et l'axe d'articulation (14) un second rayon (r2), dans lequel la tige filetée (13) et l'axe d'articulation (14) sont disposés perpendiculairement l'une à l'autre et se croisent de telle sorte qu'une distance entre l'axe de rotation central (R) et l'axe de tige central (S) est inférieure à la somme du premier rayon (r1) et du deuxième rayon (r2), dans lequel ladite exactement une plaque de retenue (10) forme une unité solidaire en rotation avec le logement d'axe (15).

2. Dispositif selon la revendication 1, **caractérisé en ce que** l'axe de rotation central (R) et l'axe de tige central (S) se croisent à une distance qui est inférieure au premier rayon (r1) de la tige filetée (13).

3. Dispositif selon l'une des revendications précédentes, **caractérisé en ce que** la tige filetée (13) est en prise par vissage avec l'axe d'articulation (14).

4. Dispositif selon la revendication précédente, **caractérisé en ce que** l'axe d'articulation (14) présente une ouverture de passage (20) avec un filetage intérieur et la tige filetée (13) est en prise par vissage avec le filetage intérieur et la tige filetée (13) peut traverser l'axe d'articulation (14).

5. Dispositif selon l'une des revendications précédentes, **caractérisé en ce qu'**une partie d'appui (16) présentant la surface d'appui (11) est prévue, la partie d'appui (16) étant disposée entre ladite exactement une articulation à charnière (R, 14, 15) et l'élément de maintien (12).

6. Dispositif selon la revendication précédente, **caractérisé en ce que** la partie d'appui (16) présente une surface de glissement concave (22) et le logement d'axe (15) présente extérieurement une surface de glissement convexe (23) qui forment ensemble un accouplement à glissement.

7. Dispositif selon l'une des revendications précédentes, **caractérisé en ce qu'**il est prévu une vis présentant la tige filetée (13) et une tête de vis (18), la tête de vis (18) fixant axialement l'élément de maintien (12).

8. Dispositif selon l'une des revendications précédentes, **caractérisé en ce que** ladite exactement une plaque de retenue (10) présente un évidement (21) dans lequel la tige filetée (13) peut pénétrer.

9. Dispositif selon l'une des revendications précédentes, **caractérisé en ce que** ladite exactement une plaque de retenue (10) présente une butée (17) qui est prévue pour s'appuyer sur le côté supérieur (6).

10. Agencement avec un dispositif selon l'une des revendications précédentes et avec une tôle trapézoïdale (2) présentant une nervure trapézoïdale (3) avec deux côtés obliques (4, 5) et un côté supérieur (6), **caractérisé en ce que** ladite exactement une plaque de retenue (10) est fixée sur l'un des deux côtés obliques (4, 5), et un plan commun (E) traverse ce côté oblique (4).
